Europäisches Patentamt

European Patent Office

Office européen des brevets

(11) Publication number: 0 370 770
A1

## (12) EUROPEAN PATENT APPLICATION

(21) Application number: 89312083.2

(22) Date of filing: 21.11.89

(51) Int. Cl.5: G01B 11/00, G01B 11/02, G01B 11/24

(30) Priority: 22.11.88 US 275247

(43) Date of publication of application:
30.05.90 Bulletin 90/22

(84) Designated Contracting States:
DE FR GB

(71) Applicant: Hewlett-Packard Company
3000 Hanover Street
Palo Alto California 94304(US)

(72) Inventor: Keely, Catherine A
22801 Longdown Road
Cupertino CA 95014(US)
Inventor: Morehouse, Charles C.
10359 Bonny Drive
Cupertino CA 95014(US)

(74) Representative: Williams, John Francis et al
J.F. Williams & Co 34 Tavistock Street
London WC2E 7PB(GB)

(54) Improved ranging system.

(57) An Improved Ranging System (10) that overcomes the problem of shadowing encountered in conventional triangulation systems is disclosed. The key to the enhanced performance that is achieved using the present invention is the built-in redundancy provided by a four aperture mask (27).

Light (14) from a laser (12) is directed to a dual purpose focusing and objective lens (20). An object (22) whose range from a reference plane (23) must be determined is illuminated by the laser light (14), and reflected rays (24) pass back through the lens (20) to a mask (26) having four apertures (27). The beams (24) that transit the mask (26) form spot images (33a and 33b) on the surface of a detector (32). By measuring the distance between the opposite pairs of spot images (33a, 33b) projected on the detector (32), the distance from the object (32) to the reference plane (23) is calculated.

FIG.6a

EP 0 370 770 A1

The present invention is a method and apparatus for determining the range from a viewed object to a reference plane. The Improved Ranging System provides an accurate, reliable, and cost effective robotic vision instrument that can be used to inspect integrated circuits assembled on an electronic component board.

As electronic circuit boards become more integrated and complex, manufacturers have become more interested in finding ways to automate the assembly, inspection, and testing of these products. Robotic arms that grasp and install parts need vision and control systems that can guide the movement of mechanical implements. When integrated circuits are mounted on boards, the process calls for careful alignment and positioning of delicate packages. The vision systems that control the operation of the robot must be capable of precisely gauging distances between the board and components placed on it.

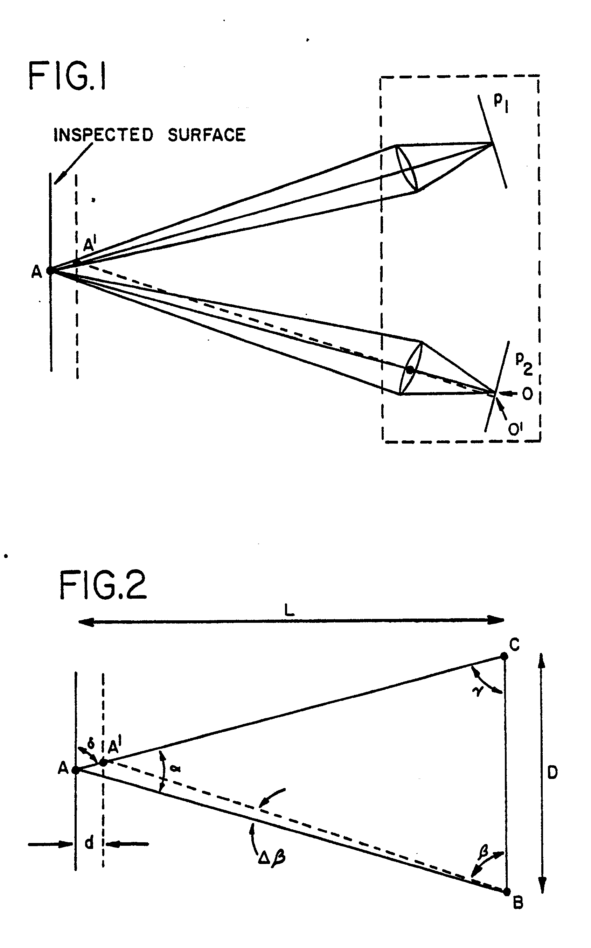

The basic methods of making range measurements are well known to persons skilled in the art of geometric optics. One of the oldest and widely used techniques that is employed in land surveillance and navigation is the method of triangulation. Figures 1 and 2 illustrate the triangulation technique explained in great detail in the text entitled Optical Techniques for Industrial Inspection by P. Cielo. Figure 1 shows a light source imager $p_1$ and a light collection imager $p_2$ that are used to determine the range to an inspected surface. Point A has changed its position to point $A'$, which shifts the image formed on camera $p_2$ from 0 to $0'$. The geometry of the triangulation method is represented in Figure 2. The range AC is given by the law of sines:

$$AC = BC \ (\sin\beta/\sin\alpha) = D\sin\beta/\sin(\pi-\beta-\gamma)$$
Equation 1.

where:

B and C are the object nodal points of the two lens systems in imagers $p_1$ and $p_2$;

D is the known fixed distance between the cameras $p_1$ and $p_2$;

$\beta$ is the measured angle in the triangulation procedure; and

$\gamma$ is known.

This conventional technique, however, suffers from several serious limitations. Since this method requires two entirely separate optical and signal processing systems, it is unattractive for robotics vision applications.

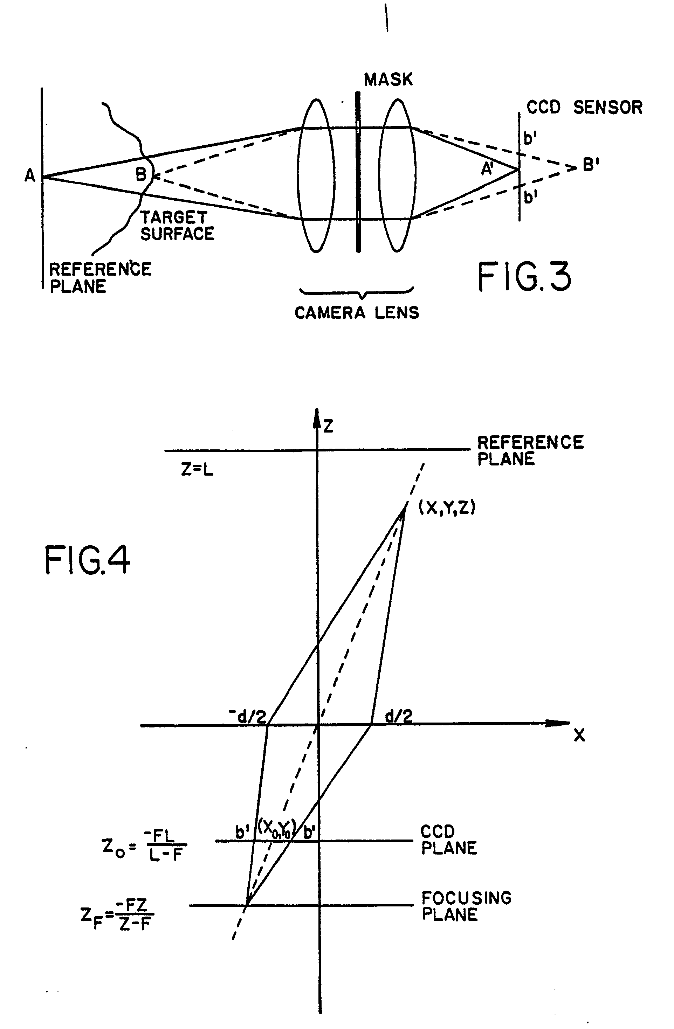

A more cost-effective configuration is presented by Marc Rioux and Francois Blais in their article entitled "Compact Three-Dimensional Camera for Robotic Applications", published in the *Journal of the Optical Society of America* in 1986. Figure 3 portrays their charge-coupled device (CCD) imaging sensor which gathers light reflected from a target surface through a set of lenses and a mask having an annular aperture. By sensing the distance between two spot images labeled $b'$ which are formed on the plane of the sensor, Blais and Rioux can measure the depth of a point B on the target surface from a point A on a reference plane behind the target. Figure 4 reveals the geometric analysis which enables them to calculate the range based upon the spread of the spots on the sensor. A depth measurement, z, is founded upon the following relations:

$z = 1(L^{-1} + Kb)$     Equation 2.

$K = (L-f)/(fdL)$     Equation 3.

where:

L = the distance along the z-axis to the reference plane;

b = the distance between the two spots $b'$ on the sensor;

f = the focal length of the lens used; and

d = is the distance across the annular aperture of the mask.

Further algebraic manipulation yields the following formulations for coordinates x and y:

$x = -x_0z(L-f)/fL$     Equation 4.

$y = -y_0z(L-f)/fL$     Equation 5.

where:

$x_0$ and $y_0$ are coordinates that define the end points of the line between the spots $b'$ on the sensor.

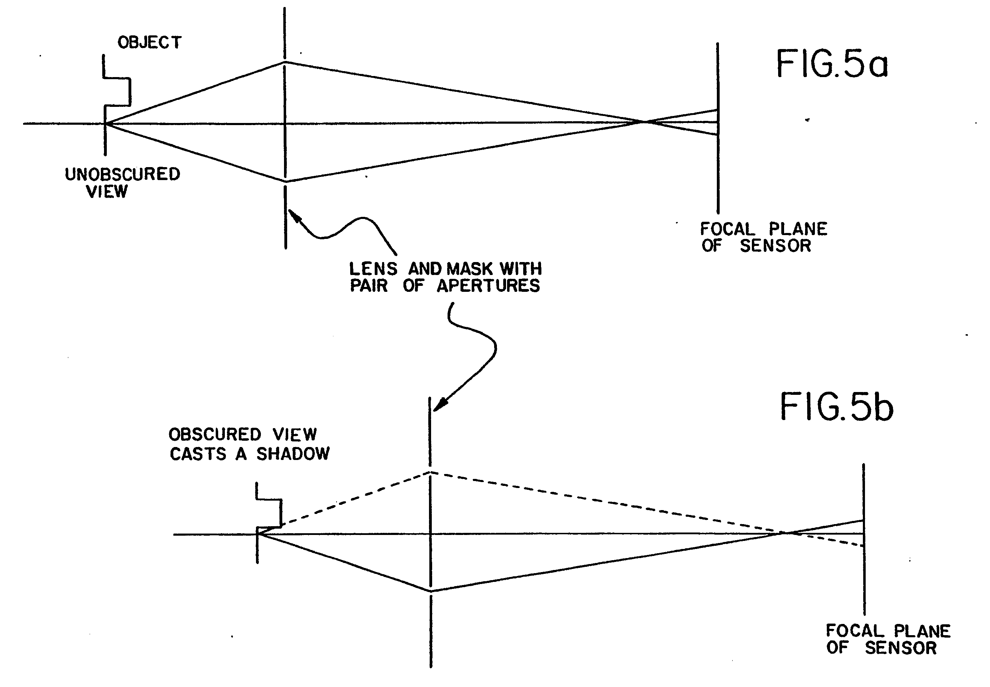

Although the Blais and Rioux method constitutes an improvement over the more traditional triangulation approach to finding the depth to some object of interest, it also is burdened by drawbacks which make it relatively unusable for complex robotic vision environments. The problem addressed by the inventors of the Improved Ranging System is the failure of previous systems like the Blais and Rioux Compact 3-D Camera to provide accurate ranging under all conditions. Sometimes part of the object whose range is to be measured is obscured by a phenomenon called shadowing. Figures 5(a) and 5(b) depict an object at the left side of the drawing which has a small prominence rising above a uniform plane. In both figures, an imaging system is represented schematically as a lens and a mask having two apertures. Light is conveyed through the mask to a sensor. In Figure 5(a), light is focused on the object and the range measurement is made without difficulty. In Figure 5(b), however, the prominence of the object has blocked some of the light directed toward it. The sensor is unable to see around the corner presented to it by the raised shape of the object. The obscured light is represented by the dashed line in Figure 5(b).

This inability to image around corners is a critical deficiency of robotic vision systems that are designed to inspect printed circuit boards populated with integrated circuit packages that are almost always parallelpipeds having rectangular projections. The problem of providing an accurate and highly reliable ranging system that avoids this shadowing phenomenon has presented a major challenge to designers in the automated inspection and fabrication fields. The development of a relatively low cost rangefinder that does not suffer from the impediment of shadowing would constitute a major technological advance in the robotics vision business. The enhanced performance that could be achieved using such an innovative device would satisfy a long felt need within the industry and would enable electronic equipment manufacturers to save substantial expenditures of time and money.

The Improved Ranging System disclosed and claimed in this patent application overcomes the problem of shadowing encountered in conventional triangulation systems. The key to the enhanced performance that is achieved using the present invention is the built-in redundancy provided by a four aperture mask. When a mask having a diamond-shaped pattern of apertures is employed in an inspection system designed to view parallelpipeds such as surface-mounted integrated circuits, one of the two orthogonal pairs of rays is always unobscured and available for accurate depth measurements. The Improved Ranging System is preferable to the previous devices described above because the unobstructed field angle it requires to supply range measurements is smaller than those of the earlier systems. Another advantage of the present invention is that a minimum portion of the incident light directed on the object of interest is passed through to the sensor. This added beneficial feature of light regulation results in excellent control of unexpected reflections of stray light that might otherwise fall on the detector and compromise the accuracy of range measurements.

The Applicants' Improved Ranging System is a measurement device that is immune from the serious problem of shadowing. This innovative method and apparatus provides an effective, efficient, and powerful tool that will enable engineers in the electronic equipment industry to construct printed circuit boards with greater ease and precision using highly reliable robotic vision systems.

An appreciation of other aims and objectives of the present invention and a more complete and comprehensive understanding of this invention may be achieved by studying the following description of a preferred embodiment and by referring to the accompanying drawings.

Figure 1 is a schematic illustration of a triangulation system that uses two imaging systems to measure the depth of an object from a reference plane.

Figure 2 presents the geometric analysis of the range-finding apparatus portrayed in Figure 1.

Figure 3 is a schematic depiction of a single sensor ranging device which utilizes a mask having an annular aperture.

Figure 4 provides the mathematical interpretation of the method invoked to calculate distances using the system shown in Figure 3.

Figures 5(a) and 5(b) reveal the critical problem of shadowing encountered by the instrument pictured in Figure 3.

Figure 6(a) is a schematic representation of the present invention, the Improved Ranging System. A mask bearing four apertures is illustrated in a front view in Figure 6(b). A pattern of spot images formed on a sensor behind the mask is depicted in a front view in Figure 6(c).

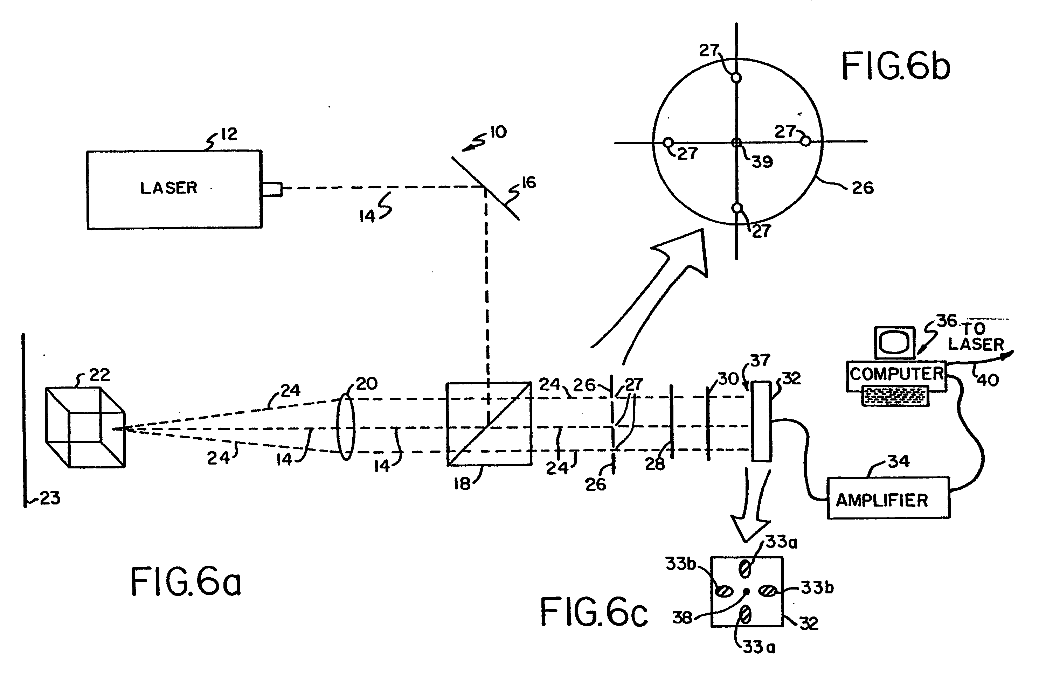

Figure 6(a) is a schematic illustration of the Improved Ranging System 10 that includes a four milliwatt red helium-neon laser 12. An output beam 14 from the laser 12 is directed toward a steering mirror 16 that, in turn, guides beam 14 into a cubic beam splitter 18. After the beam 14 is turned again by ninety degrees, it enters a 48 mm lens 20 that functions as both a focusing and an objective lens. Light 14 from the laser 12 is conveyed by lens 20 to an object 22 whose range from a reference plane 23 must be measured. Rays 24 reflected from the object 22 pass back through the lens 20, beam splitter 18, and then strike a circular mask 26. Four apertures 27 are formed in a diamond-shaped pattern on the mask 26, which may be seen in a front view in Figure 6(b). A set of prisms (not shown) may be used to improve the imaging and separation of the four beams 24 which pass through the apertures 27. A red filter 28 and an infrared filter 28 are placed behind the mask 26 to prevent unwanted components of the light 24 from falling on a position sensitive detector 32. The four apertures 27 depicted in Figure 6(b) allow two pairs 33a and 33b of spot images to form on the receiving plane of the sensor 32, which is capable of converting the optical information it gathers into an electronic signal that is fed through a conventional amplifier 34 into a computer 36. Both the mask 26 and the sensor 32 are located in positions which are not co-incident with the focal plane of the lens 20. The detector 32 senses the positions of the two pairs of the transmitted spots 33a and 33b. Four lateral effect photodiodes may be employed in place of the position sensitive photodiode array 32.

The range measurement from the object 22 to the reference plane 23 is calculated by sensing the spread of the centroids of a pair of the spots 33a or 33b and by using a computer program that incorporates the mathematical relations described above in Equations 2 through 5. When an object 22 is viewed by the system 10, two pairs of spot images 33a and 33b are usually formed on the face of the detector or camera 32. If the topology of the object 22 obscures some of the incident or reflected light 14 or 24, one of the spot images 33 will fade or disappear, as described and illustrated above in Figure 5(b). The range calculation requires only one intact and unobscured pair of spot images 33. If one pair of spot images 33 is missing or impaired, the range computation is predicated on the spread distance of the other pair. This inherent redundancy of the system 10 is the source of its immunity from shadowing which besets previous devices and renders them unusable for inspection operations involving integrated circuit packages that are nearly always rectilinear. The inventors currently presume that the best mode of the present invention incorporates a mask 26 having four apertures 27 that are laid out in a diamond or square pattern as pictured in Figure 6(b). The aperture pattern may be varied to suit the particular geometric character of the objects 22 that are to be viewed and ranged. Objects possessing different symmetries would require different masks having some other number of holes. Particular algorithms may be developed that optimize the placement of these apertures on a specialized mask.

The Improved Ranging System provides an accurate and reliable range-finder for robotic inspection, testing, and assembly; but may also be used to great advantage in any number of other fields including navigation and satellite reconnaissance. This invention constitutes a major step forward in the continually evolving field of artificial vision and control.

## Claims

1. A range finder (10) comprising a radiant energy source (12) for producing an incident ray (14); a waveguide means (14, 16, 18, and 20) for steering said incident ray (14) toward a three-dimensional object (22) having an unknown range from a reference plane (23); and objective means (20) for collecting a plurality of reflected rays (24) from said object (22) and then transmitting said reflected rays (24) to blocking means (26) which allow the passage of a portion of the rays (24) therethrough which then impinge upon sensor means (32) for measuring said unknown range, characterised in that the blocking means transmits four or more groups of reflected rays.

2. A range finder (10) according to claim 1 comprising: a source (12) of collimated radiant energy (14) which illuminates an object (22) through a focusing lens (20); said focusing lens (20) also comprising said objective means (20) which gather a plurality of reflected beams (24) of radiant energy from said object (22) to said blocking means comprising a mask (26) having at least four apertures (27) for transmitting some of said reflected beams (24) to said sensor means (32) which receives a plurality of spot images (33a, 33b) that are used to calculate said unknown range.

3. A range finder (10) according to claims 1 and 2 comprising a laser (12) that emits visible light (14); waveguide means comprising, a steering mirror (16) for reflecting said light (14) to a beamsplitter (18) which conveys said light (14) to a dual focusing and objective lens (20) that focuses said light (14) on an object (22) which is located at an unknown distance from a reference plane (23); and blocking means comprising a mask (26) bearing a symmetrical pattern of two opposed orthogonal pairs of apertures (27), said pairs of apertures (27) being disposed on said mask (26) so that redundant rays of reflected light (24) are allowed to pass through a red filter (28) and an infrared blocking filter (30) and finally strike said sensor means comprising a position-sensitive photodetector and a processor (32, 34 and 36) which are together capable of interpreting a pattern of spots (33a, 33b) formed on said photodetector (32) as a measurement of said distance of said object (22) to said reference plane (23).

4. A method of ranging comprising the steps of: providing a source (12) of collimated radiant energy (14); illuminating an object (22) with said collimated radiant energy (14) through a lens (20); collecting a plurality of reflected beams (24) through said lens (20); directing said reflected beams (24) which have been collected by said lens (20) toward a mask (26); said mask (26) having at least four apertures (27) that allows portions of said reflected beams (24) to pass through it forming a plurality of spot images (33a, 33b) of radiant energy on a detector (32) by gathering said reflected beams (24) which have passed through said apertures (27) onto said detector (32); and computing the distance from said object (22) to a reference plane (23) based upon a calculation of a spread distance between the centroids of an opposed pair of said spot images (33a, 33b) formed on said detector (32).

# FIG.I

INSPECTED SURFACE

# FIG.2

**FIG.3**

MASK

CCD SENSOR

A

B

TARGET SURFACE

REFERENCE PLANE

CAMERA LENS

A'

b'

B'

b'

**FIG.4**

REFERENCE PLANE

$Z = L$

$(X, Y, Z)$

$-d/2$

$d/2$

$X$

$Z_O = \dfrac{-FL}{L-F}$

b' $(X_0, Y_0)$ b'

CCD PLANE

$Z_F = \dfrac{-FZ}{Z-F}$

FOCUSING PLANE

OBJECT

FIG.5a

UNOBSCURED
VIEW

FOCAL PLANE
OF SENSOR

LENS AND MASK WITH
PAIR OF APERTURES

FIG.5b

OBSCURED VIEW
CASTS A SHADOW

FOCAL PLANE
OF SENSOR

EP 0 370 770 A1

FIG.6b

LASER

12

10

14

16

27

27

39

27

27

26

FIG.6a

22

23

24

20

24

14

14

18

24

24

26

24

26

27

27

26

30

28

37

32

36 TO LASER

COMPUTER

40

34

AMPLIFIER

FIG.6c

33a

33b

33b

38

32

33a

EP 0 370 770 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 864 030 (T.N. CORNSWEET) * abstract; column 10, lines 3-21; figures 1,8,9 * | 1 | G 01 B 11/00 G 01 B 11/02 G 01 B 11/24 |
| Y | EP-A-0 248 479 (N.V. PHILIPS' GLOEILAMPENFABRIEKEN) * abstract; page 2, line 13 - page 3, line 18; page 9, line 30 - page 12, line 24; figures 1,2 * | 1,2,4 | |
| A | | 3 | |
| Y | EP-A-0 070 141 (RENISHAW ELECTRICAL LTD.) * abstract; page 4,5; figures 2-4 * | 1,2,4 | |
| A | | 3 | |
| A | OPTIK vol. 76, no. 1, April 1987, pages 7-11, Stuttgart, DE; N. KRISHNA MOHAN et al.: "Applications of multi-aperture white light speckle photography" * page 7, left column, second paragraph; figures 1,2 * | 1,4 | |
| A | JOURNAL OF THE OPTICAL SOCIETY OF AMERICA A vol. 3, no. 9, September 1986, pages 1518-1521, Woodbury, NY, USA; M. RIOUX et al.: "Compact three-dimensional camera for robotic applications" * abstract; figures 1,2,4 * | 1,4 | TECHNICAL FIELDS SEARCHED (Int. Cl.5) G 01 B G 01 C |

The present search report has been drawn up for all claims

| Place of search | Date of completion of the search | Examiner |
|---|---|---|
| BERLIN | 12-02-1990 | VORROPOULOS G |